(19) **Europäisches Patentamt / European Patent Office / Office européen des brevets**

(11) **EP 4 232 333 B1**

(12) **FASCICULE DE BREVET EUROPEEN**

(45) Date de publication et mention de la délivrance du brevet:
**22.05.2024 Bulletin 2024/21**

(21) Numéro de dépôt: **21793978.4**

(22) Date de dépôt: **21.09.2021**

(51) Classification Internationale des Brevets (IPC):
**B60W 30/14** (2006.01)  **B60W 50/14** (2020.01)

(52) Classification Coopérative des Brevets (CPC):
**B60W 30/143; B60W 50/14;** B60W 2050/146;
B60W 2520/10; B60W 2520/105; B60W 2720/103;
B60W 2720/106

(86) Numéro de dépôt international:
**PCT/FR2021/051605**

(87) Numéro de publication internationale:
**WO 2022/084597 (28.04.2022 Gazette 2022/17)**

(54) **PROCÉDÉ ET DISPOSITIF DE TYPAGE DU MODE DE CONDUITE D'UN VÉHICULE AUTONOME**

VERFAHREN UND VORRICHTUNG ZUR TYPISIERUNG DES FAHRMODUS EINES AUTONOMEN FAHRZEUGS

METHOD AND DEVICE FOR TYPIFYING THE DRIVING MODE OF AN AUTONOMOUS VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2020 FR 2010818**

(43) Date de publication de la demande:
**30.08.2023 Bulletin 2023/35**

(73) Titulaire: **Stellantis Auto SAS
78300 Poissy (FR)**

(72) Inventeurs:
• **VIVET, Luc
  75016 PARIS 16 (FR)**
• **TOUIL, Lhassane
  Kenitra, 14000 (MA)**
• **KOUBACHI, Mouad
  BENI MELLAL, 23000 (MA)**

(56) Documents cités:
**EP-A1- 4 232 335      WO-A1-2020/066331
DE-A1-102017 212 899  DE-A1-102019 201 800
US-A1- 2020 218 272**

**Description**

La présente invention revendique la priorité de la demande française 2010818 déposée le 22.10.2020.

L'invention est dans le domaine des systèmes d'aide à la conduite de véhicule autonome. En particulier, l'invention concerne un procédé et un dispositif de régulation de vitesse du véhicule typant un mode de conduite d'un véhicule autonome.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

On entend par « accélération », l'accélération longitudinale du véhicule, c'est-à-dire une différence de vitesse dudit véhicule entre deux instants donnés divisée par la durée entre ces deux instants. L'accélération peut être positive ou négative. Dans ce dernier cas, l'accélération est synonyme de décélération.

Un sélecteur de modes de conduite est présent sur certains véhicules : par exemple, dans un cas limitatif de 3 modes différents, un conducteur du véhicule sélectionne un mode sportif, un mode normal ou un mode économique. Suivant la sélection du mode de conduite, des systèmes d'aides à la conduite sont aptes à typer le mode de conduite du véhicule par un pilotage d'actionneurs (couple moteur, freinage, suspensions ...). Ces systèmes d'aide à la conduite agissent sur la dynamique longitudinale du véhicule, et donc sur la position, la vitesse, l'accélération et le jerk du véhicule.

On connait par le document DE102017212899A1 un procédé de calcul et de régulation d'une trajectoire pour un système d'aide à la conduite et une unité de commande et véhicule automobile. On connait par le document WO2020/066331A1 un dispositif de commande de véhicule permettant d'améliorer le confort de conduite d'un véhicule pendant une commande de stationnement. On connait par le document DE102019201800 un procédé de planification de trajectoire d'un système d'aide à la conduite. On connait par le document US2020/218272A1 un procédé de commande d'un véhicule consistant en un contrôleur prédictif de modèle centré sur le conducteur.

Les systèmes de régulation de véhicule sont connus, et sont aptes à réguler la vitesse du véhicule depuis une vitesse initiale vers une vitesse cible. Lors de l'acquisition d'une nouvelle vitesse cible, le régulateur reçoit directement entrée la vitesse cible. Pour éviter les à-coups ou un jerk trop important, les régulateurs existants sont assez complexes et comportent de nombreux paramètres à régler. Si on souhaite typer le véhicule selon plusieurs modes de conduite, le nombre de paramètres à régler est multiplié par le nombre de mode de conduite à prendre en compte. La calibration ou la détermination de ces paramètres est long et complexe : un réglage d'un paramètre d'un régulateur de vitesse véhicule dans un mode de conduite particulier peut avoir des impacts sur le comportement du véhicule dans un autre mode de conduite. Par ailleurs, ces régulateurs de vitesse ne permettent pas de garantir un jerk maximum dans les premiers instants du démarrage de la régulation.

Un objet de la présente invention est de remédier au problème précité, en particulier déterminer un profil de vitesse cible à suivre, paramétré simplement par un paramètre représentant le jerk maximum représentatif du mode de conduite choisi par le conducteur tout en ayant le jerk voulu dans les premiers instants du démarrage de la régulation.

A cet effet, un premier aspect de l'invention concerne un procédé de typage du mode de conduite d'un véhicule autonome, ledit véhicule comportant un régulateur de vitesse véhicule fondé sur une vitesse cible. Ledit procédé comporte les étapes de :

- Sélection d'un paramètre représentant un jerk maximum que le véhicule ne doit pas dépasser en valeur absolue ;
- Acquisition d'une vitesse cible représentant la vitesse que doit atteindre le véhicule ;
- Acquisition d'une vitesse initiale du véhicule représentant une vitesse du véhicule à l'instant courant ;
- Acquisition d'une accélération initiale du véhicule représentant une accélération du véhicule à l'instant courant ;
- Détermination d'un profil de vitesse cible fonction dudit paramètre, de la vitesse du véhicule initiale, de la vitesse de consigne, et de l'accélération initiale, ledit profil de vitesse cible présentant une accélération constante.

Le jerk, la variation d'accélération du véhicule par unité de temps, est bien ressenti par des occupants du véhicule. Il est représentatif d'un mode de conduite. Un jerk proche de 1,5 m/s3, respectivement 0,7 m/s3 ou 0,3 m/s3, représente un mode de conduite sportif, respectivement normal ou économique. Plus le jerk est grand plus l'à-coup du véhicule ressenti par les occupants du véhicule. Le paramètre $J_{max}$ est déterminé par exemple selon la sélection par un conducteur du mode de conduite souhaité (sportif, normal ou économique par exemple).

Lorsque le véhicule accélère selon le profil de vitesse cible avec une vitesse cible différente de la vitesse actuelle, ou lors de changement de la vitesse cible d'un régulateur de vitesse, un jerk est imposé au véhicule. Déterminer une trajectoire de vitesse cible à accélération constante fonction du paramètre $J_{max}$, de la vitesse du véhicule initiale, de la vitesse de consigne, et de l'accélération initiale va avoir pour effet de maîtriser le jerk du véhicule pendant le temps de manoeuvre (pilotage de la vitesse du véhicule par le régulateur de vitesse pour passer de la vitesse initiale à la vitesse cible). Le jerk est alors maximum au début de la manoeuvre. Lorsque le conducteur, par exemple, a déterminé la vitesse cible, il ressentira immédiatement le jerk initial conforme au mode de conduite du véhicule (sportif, normal, éco par exemple) voulu par une sélection d'un paramètre représentant le jerk maximum. Prendre en compte l'accélération initiale dans la détermination de la trajectoire de vitesse cible évite une perte de maîtrise du jerk.

Par ailleurs, même si le régulateur de vitesse est un simple régulateur proportionnel, le profil de vitesse tel que déterminé type le mode de conduite très simplement avec un seul paramètre $J_{max}$ à calibrer.

Avantageusement, l'accélération constante, am, du profil de vitesse cible à pour équation :

$$am = \frac{DV}{tm}$$

où *DV* est la différence entre la vitesse cible et la vitesse initiale, et *tm* est un temps de manoeuvre pour atteindre la vitesse cible.

Le profil de vitesse cible a alors pour équation

$V_c(t) = V_0 + \frac{DV}{tm}t$ , un segment de droite reliant la vitesse initiale, $V_0$, à la vitesse de consigne en un temps de manoeuvre *tm*. Elle est très simple à calculer et prend peu de ressource de calculs.

Avantageusement, le temps de manoeuvre, *tm,* a pour équation :

$$tm = \frac{-3A_0 + \sqrt{9{A_0}^2 + 24|DV|J_{\max}}}{2J_{\max}}$$

où $A_0$ est l'accélération initiale, où |DV| est la valeur absolue de la différence entre la vitesse cible et la vitesse initiale, et $J_{max}$ est le paramètre représentant le jerk maximum.

Ainsi, le Jerk initial est maîtrisé et est égale jerk maximum. Pendant tout le temps de la manoeuvre le jerk reste inférieur à un jerk maximum prédéterminé, et l'accélération reste inférieure à une accélération maximum prédéterminée.

La mise au point du régulateur en est simplifiée : il y a moins de paramètres à calibrer. Au lieu d'avoir un régulateur complexe à régler par mode de conduite souhaitée, un seul régulateur simple, de type proportionnel, est nécessaire et seul le paramètre, le jerk maximum, détermine le mode de conduite résultant. Avec un jerk maximum proche de 1,5 m/s³, respectivement 0, m/s³ et 0, m/s³, la conduite sera ressentie par le conducteur comme étant sportive, respectivement normale et économique.

Avantageusement, lorsque la valeur absolue de l'accélération initiale est supérieur à une accélération prédéterminée, le procédé comporte en outre la détermination d'un signal d'alerte représentatif d'un mode de conduite non compatible avec le paramètre représentatif du jerk maximum.

Dans certaines situations de vie du véhicule, avec une forte accélération initiale, par exemple de l'ordre de -3 m/s², en présence d'une vitesse cible très inférieure à la vitesse initiale, physiquement le véhicule ne peut pas décélérer dans le temps de manoeuvre déterminé. Un signal est déterminé pour reconnaître cette situation de vie.

Avantageusement, le signal d'alerte commande l'affichage d'un message d'alerte. Ainsi, le conducteur est prévenu de la situation anormale détectée : impossibilité d'accélérer le véhicule selon le mode de conduite attendu.

Avantageusement, le procédé comporte en outre une étape de régulation de vitesse selon le profil de vitesse cible.

Ainsi, l'application du profil de vitesse type le véhicule selon le mode de conduite attendu et paramétré par $J_{max}$.

Un deuxième aspect de l'invention concerne un dispositif comprenant une mémoire associée à au moins un processeur configuré pour mettre en oeuvre le procédé selon le premier aspect de l'invention.

L'invention concerne aussi un véhicule comportant le dispositif.

L'invention concerne aussi un programme d'ordinateur comprenant des instructions adaptées pour l'exécution des étapes du procédé, selon le premier aspect de l'invention, lorsque ledit programme est exécuté par au moins un processeur.

D'autres caractéristiques et avantages de l'invention ressortiront de la description des modes de réalisation non limitatifs de l'invention ci-après, en référence aux figures annexées, sur lesquelles :

[Fig. 1] illustre schématiquement un dispositif, selon un exemple particulier de réalisation de la présente invention.
[Fig. 2] illustre schématiquement un procédé de typage du mode de conduite d'un véhicule autonome, selon un exemple particulier de réalisation de la présente invention.

L'invention est décrite ci-après dans son application, non limitative, au cas d'un véhicule automobile autonome circulant sur une route ou sur une voie de circulation. D'autres applications telles qu'un robot dans un entrepôt de stockage ou encore une motocyclette sur une route de campagne sont également envisageables.

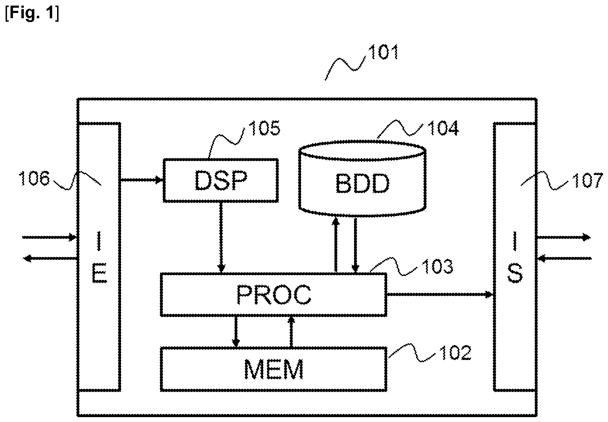

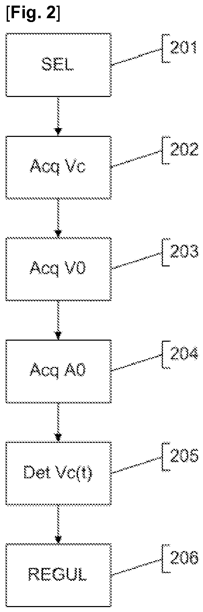

La figure 1 représente un exemple de dispositif 101 compris dans le véhicule, dans un réseau (« cloud ») ou dans un serveur. Ce dispositif 101 peut être utilisé en tant que dispositif centralisé en charge d'au moins certaines étapes du procédé décrit ci-après en référence à la figure 2. Dans un mode de réalisation, il correspond à un calculateur de conduite autonome.

Dans la présente invention, le dispositif 101 est compris dans le véhicule.

Ce dispositif 101 peut prendre la forme d'un boitier comprenant des circuits imprimés, de tout type d'ordinateur ou encore d'un téléphone mobile (« smartphone »).

Le dispositif 101 comprend une mémoire vive 102 pour stocker des instructions pour la mise en oeuvre par un processeur 103 d'au moins une étape du procédé tel que décrit ci-avant. Le dispositif comporte aussi une mémoire de masse 104 pour le stockage de données destinées à être conservées après la mise en oeuvre du procédé.

Le dispositif 101 peut en outre comporter un processeur de signal numérique (DSP) 105. Ce DSP 105 reçoit des données pour mettre en forme, démoduler et amplifier, de façon connue en soi ces données.

Le dispositif 101 comporte également une interface d'entrée 106 pour la réception des données mises en oeuvre par le procédé selon l'invention et une interface de sortie 107 pour la transmission des données mises en oeuvre par le procédé selon l'invention.

La figure 2 illustre schématiquement un procédé de typage du mode de conduite d'un véhicule autonome, selon un exemple particulier de réalisation de la présente invention.

Dans une étape 201, SEL, un paramètre, $J_{max}$, représentant un jerk maximum que le véhicule ne doit pas dépasser en valeur absolue, est sélectionné. Dans un mode de réalisation, cette sélection est obtenue par la manipulation d'un conducteur du véhicule d'un sélecteur de modes de conduite présent sur le véhicule. Suivant le mode de conduite sélectionné, une valeur est affectée audit paramètre $J_{max}$, Par exemple, cette valeur est de 1,5 m/s$^3$, respectivement 0,7 m/s$^3$ ou 0,3 m/s$^3$, pour représenter un mode de conduite sportif, respectivement normal ou économique. D'autres moyens configurés pour sélectionner le paramètre existent, comme, par exemple, une interaction du conducteur avec un écran tactile disponible sur un tableau de bord du véhicule.

Dans une étape 202, Acq Vc, la vitesse cible est acquise. Le vitesse cible représente la vitesse que doit atteindre le véhicule. L'acquisition de cette vitesse cible est, par exemple, réalisée par :

- Le conducteur, ou un passager du véhicule, qui renseigne la vitesse désirée à l'aide d'un bouton (+/-), d'un clavier, à l'aide d'une interface écran tactile, et/ou à l'aide d'une reconnaissance vocale...
- Un dispositif de géolocalisation associé à une cartographie. La géolocalisation déterminant la position du véhicule, le dispositif associé à une cartographie comportant une vitesse conseillée ou vitesse limite suivant la position du véhicule détermine alors la vitesse en fonction de la position et une direction du véhicule ;
- Des dispositifs de communication par radiofréquence (par exemple 3G, 4G, 5G , WIFI, ...) entre véhicules (communément dit communications V2V), entre véhicule et infrastructure (communément dit communications V2I) ..., le dispositif recevant alors la consigne de vitesse.

Dans une étape 203, Acq V0, la vitesse du véhicule est acquise par des organes classiquement présents sur ledit véhicule. Cette vitesse est dite vitesse initiale, elle est acquise à l'instant courant où on souhaite typer le mode de conduite ou déterminer le profil de vitesse cible.

Dans une étape 204, Acq A0, l'accélération du véhicule est acquise par des organes classiquement présents sur ledit véhicule. Cette accélération est dite accélération initiale, elle est acquise à l'instant courant où on souhaite typer le mode de conduite ou déterminer le profil de vitesse cible.

Dans une étape 205, Det Vc(t), le profil de vitesse cible est déterminé. Ce profil de vitesse détermine la vitesse cible à chaque instant pour que le véhicule accélère de la vitesse initiale à la vitesse cible. Le profil de vitesse cible est à accélération constante. Ainsi, le jerk sera maximal au début où le véhicule accélère selon le profil de vitesse cible. Le profil de vitesse cible prend en compte l'accélération initiale.

Ainsi le jerk initial est maitrisé et contenu. Pendre en compte le paramètre $J_{max}$ dans le profil de vitesse, extrait la prise en compte des paramètres pouvant typer le mode de conduite dans le régulateur de vitesse, le régulateur en est ainsi simplifié. Ce régulateur devient alors un « simple » proportionnel, il pilote l'accélération du véhicule proportionnellement à la différence entre la vitesse courante du véhicule et la vitesse cible.

Dans un mode de réalisation, le profil de vitesse cible a pour équation $V_c(t) = V_0 + \dfrac{DV}{tm}t$ où $V_0$ est la vitesse initiale, $DV$ est la différence entre la vitesse cible et la vitesse initiale, et $tm$ est un temps de manoeuvre pour atteindre la vitesse cible et tm a pour équation

$$tm = \frac{-3A_0 + \sqrt{9A_0{}^2 + 24|DV|J_{\max}}}{2\,J_{\max}}$$

où $A_0$ est l'accélération initiale, $J_{max}$ est le paramètre représentation, du jerk maximum souhaitée. Les autres valeurs numériques sont déterminées à partir d'hypothèses sur des accélérations longitudinales du véhicule avant et après la manoeuvre, sur une modélisation polynomiale de la trajectoire longitudinale du véhicule et sur le fait que le jerk initial soit égal à $J_{max}$.

Dans un autre mode opératoire, les valeurs numériques sont paramétrées afin de prendre en compte des erreurs de modélisations.

Dans une étape 206, REGUL, un régulateur de vitesse prend en entrée comme vitesse de consigne le profil de vitesse cible déterminé. Ainsi le véhicule est typé selon le mode de conduite sélectionné.

Dans un autre mode de réalisation, lorsque la valeur absolue de l'accélération initiale est supérieur à une accélération prédéterminée, comme par exemple 3 m/s², le procédé comporte en outre la détermination d'un signal d'alerte représentatif d'un mode de conduite non compatible avec le paramètre représentatif du jerk maximum. Le signal d'alerte pilote alors l'affichage d'un message pour le conducteur. En effet, les accélérations du véhicule sont limitées physiquement. Si l'accélération initiale du véhicule est déjà au-delà d'un seuil prédéterminé, physiquement il n'est plus possible d'accélérer le véhicule afin d'avoir un jerk initial tel que voulu. Le conducteur est alors informé. Egalement, la mise en place d'un système d'arrêt d'urgence peut être activé.

La présente invention ne se limite pas aux formes de réalisation décrites ci-avant à titre d'exemples ; elle s'étend à d'autres variantes selon les revendications annexées,

Des équations et calculs ont en outre été détaillés. L'invention n'est pas limitée à la forme de ces équations et calcul, et s'étend à tout type d'autre forme mathématiquement équivalente.

## Revendications

**1.** Procédé de typage du mode de conduite d'un véhicule autonome, ledit véhicule comportant un régulateur de vitesse véhicule fondé sur une vitesse cible, ledit procédé comportant les étapes de :

• Sélection d'un paramètre, $J_{max}$, représentant un jerk maximum que le véhicule ne doit pas dépasser en valeur absolue ;
• Acquisition d'une vitesse cible représentant la vitesse que doit atteindre le véhicule ;
• Acquisition d'une vitesse initiale du véhicule représentant une vitesse du véhicule à l'instant courant ;
• Acquisition d'une accélération initiale du véhicule représentant une accélération du véhicule à l'instant courant ;
• Détermination d'un profil de vitesse cible fonction dudit paramètre, de la vitesse du véhicule initiale, de la vitesse de consigne, et de l'accélération initiale, ledit profil de vitesse cible présentant une accélération constante.

**2.** Procédé selon la revendication 1 dans lequel l'accélération constante, *am,* du profil de vitesse cible à pour équation :

$$am = \frac{DV}{tm}$$

où DVest une différence entre la vitesse cible et la vitesse initiale, et *tm* est un temps de manoeuvre pour atteindre la vitesse cible.

**3.** Procédé selon la revendication 2, dans lequel le temps de manoeuvre, *tm,* a pour équation :

$$tm = \frac{-3A_0 + \sqrt{9A_0{}^2 + 24|DV|J_{max}}}{2J_{max}}$$

où $A_0$ est l'accélération initiale, où |DV| est une valeur absolue de la différence entre la vitesse cible et la vitesse initiale, et $J_{max}$ est le paramètre représentant le jerk maximum.

**4.** Procédé selon l'une des revendications précédentes, dans lequel lorsque la valeur absolue de l'accélération initiale est supérieur une accélération prédéterminée, le procédé comporte en outre la détermination d'un signal d'alerte représentatif d'un mode de conduite non compatible avec le paramètre représentatif du jerk maximum.

**5.** Procédé selon la revendication 4, dans lequel le signal d'alerte commande l'affichage d'un message d'alerte.

**6.** Procédé selon l'une des revendications précédentes, dans lequel le procédé comporte en outre une étape de régulation de vitesse selon le profil de vitesse cible.

**7.** Dispositif (101) comprenant une mémoire (102) associée à au moins un processeur (103) configuré pour mettre en oeuvre le procédé selon l'une des revendications précédentes.

**8.** Véhicule comportant le dispositif selon la revendication 7.

**9.** Programme d'ordinateur comprenant des instructions adaptées pour l'exécution des étapes du procédé selon l'une des revendications 1 à 6 lorsque ledit programme est exécuté par au moins un processeur (103).

## Patentansprüche

**1.** Verfahren zum Typisieren des Fahrmodus eines autonomen Fahrzeugs, wobei das Fahrzeug einen Fahrzeuggeschwindigkeitsregler basierend auf einer Zielgeschwindigkeit umfasst, wobei das Verfahren die folgenden Schritte umfasst:

• Auswahl eines Parameters $J_{max}$, der einen maximalen Ruck darstellt, den das Fahrzeug in absoluten Werten nicht überschreiten darf;
• Erfassung einer Zielgeschwindigkeit, die die Geschwindigkeit darstellt, die das Fahrzeug erreichen muss;
• Erfassen einer Anfangsgeschwindigkeit des Fahrzeugs, die eine Geschwindigkeit des Fahrzeugs zum aktuellen Zeitpunkt darstellt;
• Erfassung einer Anfangsbeschleunigung des Fahrzeugs, die eine Beschleunigung des Fahrzeugs zum aktuellen Zeitpunkt darstellt;
• Bestimmung eines Zielgeschwindigkeitsprofils basierend auf dem Parameter, der anfänglichen Fahrzeuggeschwindigkeit, der Sollgeschwindigkeit und der Anfangsbeschleunigung, wobei das Zielgeschwindigkeitsprofil eine konstante Beschleunigung darstellt.

2. Verfahren nach Anspruch 1, bei dem die konstante Beschleunigung am *des* Zielgeschwindigkeitsprofils die Gleichung hat:

$$am = \frac{DV}{tm}$$

Oder *DV* ist die Differenz zwischen der Zielgeschwindigkeit und der Anfangsgeschwindigkeit, und *tm* ist die Manövrierzeit bis zum Erreichen der Zielgeschwindigkeit.

3. Verfahren nach Anspruch 2, bei dem die Manövrierzeit *tm* die Gleichung hat:

$$tm = \frac{-3A_0 + \sqrt{9A_0^2 + 24|DV|J_{max}}}{2J_{max}}$$

Oder $A_0$ ist die Anfangsbeschleunigung, wobei |DV| ist ein absoluter Wert der Differenz zwischen der Zielgeschwindigkeit und der Anfangsgeschwindigkeit und $J_{max}$ ist der Parameter, der den maximalen Ruck darstellt.

4. Verfahren nach einem der vorhergehenden Ansprüche, bei dem, wenn der Absolutwert der Anfangsbeschleunigung größer als eine vorgegebene Beschleunigung ist, das Verfahren außerdem die Bestimmung eines Warnsignals umfasst, das einen Fahrmodus angibt, der nicht mit dem für das Maximum repräsentativen Parameter kompatibel ist Ruck.

5. Verfahren nach Anspruch 4, wobei das Warnsignal die Anzeige einer Warnmeldung steuert.

6. Verfahren nach einem der vorhergehenden Ansprüche, wobei das Verfahren weiterhin einen Geschwindigkeitsregulierungsschritt gemäß dem Zielgeschwindigkeitsprofil umfasst.

7. Vorrichtung (101), umfassend einen Speicher (102), der mindestens einem Prozessor (103) zugeordnet ist, der zur Durchführung des Verfahrens nach einem der vorhergehenden Ansprüche konfiguriert ist.

8. Fahrzeug umfassend die Vorrichtung nach Anspruch 7.

9. Computerprogramm mit Anweisungen, die für die Ausführung der Schritte des Verfahrens nach einem der Ansprüche 1 bis 6 geeignet sind, wenn das Programm von mindestens einem Prozessor (103) ausgeführt wird.

**Claims**

1. Method for typing the driving mode of an autonomous vehicle, said vehicle comprising a vehicle speed regulator based on a target speed, said method comprising the steps of:

• Selection of a parameter, $J_{max}$, representing a maximum jerk that the vehicle must not exceed in absolute value;
• Acquisition of a target speed representing the speed that the vehicle must reach;
• Acquisition of an initial speed of the vehicle representing a speed of the vehicle at the current time;
• Acquisition of an initial acceleration of the vehicle representing an acceleration of the vehicle at the current instant;
• Determination of a target speed profile based on said parameter, the initial vehicle speed, the set speed, and the initial acceleration, said target speed profile presenting a constant acceleration.

2. Method according to claim 1 in which the constant acceleration, am, of the target speed profile has the equation:

$$am = \frac{DV}{tm}$$

Or *DV* is a difference between the target speed and the initial speed, and *tm* is a maneuvering time to reach the target speed.

3. Method according to claim 2, in which the maneuvering time, *tm*, has the equation:

$$tm = \frac{-3A_0 + \sqrt{9A_0^2 + 24|DV|J_{max}}}{2J_{max}}$$

Or $A_0$ is the initial acceleration, where |DV| is an absolute value of the difference between the target speed and the initial speed, and $J_{max}$ is the parameter representing the maximum jerk.

4. Method according to one of the preceding claims, in which when the absolute value of the initial acceleration is greater than a predetermined acceleration, the method further comprises the determination of an alert signal representative of a driving mode not compatible with the parameter representative of the maximum jerk.

5. Method according to claim 4, wherein the alert signal controls the display of an alert message.

6. Method according to one of the preceding claims, in which the method further comprises a speed regulation step according to the target speed profile.

7. Device (101) comprising a memory (102) associated with at least one processor (103) configured to implement the method according to one of the preceding claims.

8. Vehicle comprising the device according to claim 7.

9. Computer program comprising instructions adapted for the execution of the steps of the method according to one of claims 1 to 6 when said program is executed by at least one processor (103).

[Fig. 1]

[Fig. 2]

```
        ┌──────────────┐
        │              │
        │     SEL      │─────┐ 201
        │              │
        └──────┬───────┘
               │
               ▼
        ┌──────────────┐
        │              │
        │    Acq Vc    │─────┐ 202
        │              │
        └──────┬───────┘
               │
               ▼
        ┌──────────────┐
        │              │
        │    Acq V0    │─────┐ 203
        │              │
        └──────┬───────┘
               │
               ▼
        ┌──────────────┐
        │              │
        │    Acq A0    │─────┐ 204
        │              │
        └──────┬───────┘
               │
               ▼
        ┌──────────────┐
        │              │
        │   Det Vc(t)  │─────┐ 205
        │              │
        └──────┬───────┘
               │
               ▼
        ┌──────────────┐
        │              │
        │    REGUL     │─────┐ 206
        │              │
        └──────────────┘
```

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2010818
- DE 102017212899 A1
- WO 2020066331 A1
- DE 102019201800
- US 2020218272 A1